# EUROPEAN PATENT APPLICATION

(11) **EP 2 479 898 A1**
(43) Date of publication of application: **25.07.2012**
(21) Application number: 11290026.1
(22) Date of filing: 19.01.2011
(51) Int. Cl.: H04B 1/04, H04B 1/66, H04B 1/00, H04B 10/12, H04W 88/08, H04W 84/04

(54) **Radio head device and method of operating a radio head device**

(71) Applicant: Alcatel Lucent, 75007 Paris (FR)
(72) Inventor: Wiegner, Dirk, 71409 Schwaikhelm (DE); Pascht, Andreas, Dr., 73635 Rudersberg (DE)
(74) Representative: Dreiss

(57) **Abstract**

The invention relates to a radio head device (100), for receiving an input signal from an external signal processing unit (12) and for upconverting said input signal to a radio frequency, RF, range, wherein said radio head device (100) comprises:
- an input interface (110) that is configured to receive a digitally modulated input signal (Di) from said external signal processing unit (12) and to transform said digitally modulated input signal (Di) into an analog input signal (Ai), and
- at least two upconversion branches (120_1, 120_2, 120_3), wherein each upconversion branch (120_1, 120_2, 120_3) is configured to filter at least one predetermined frequency subband of said analog input signal (Ai) to obtain a subband input signal (si1 si2, si3), and to transform said subband input signal (si1, si2, si3) into a predetermined RF range to obtain a respective RF subband signal (si1_RF, si2_RF, si3_RF).

## Description

### Field of the invention

The present invention relates to a radio head device for receiving an input signal from an external signal processing unit and for upconverting said input signal to a radio frequency, RF, range.

The present invention further relates to a method of operating a radio head device.

### Background

The radio coverage of a wireless communications system such as a cellular radio network is usually provided by several base stations each of which maintains wireless communications with one or more terminals via respective antennas. A base station comprises baseband processing means that perform baseband signal processing and put out at least one signal representative of data to be transmitted to the terminals.

In order to increase flexibility of the base stations, it is desirable to allow the antennas - or at least circuitry which should be arranged close to the antennas - to be located remote from the baseband processing unit which has led to the development of discrete radio head devices that receive data supplied by the baseband processing means and convert said data to a suitable form for transmission by an antenna.

It is an object of the present invention to provide an improved radio head device and an improved method of operating a radio head device which enable a higher degree of flexibility regarding signal processing and transmission.

### Summary

According to the present invention, regarding the abovementioned radio head device, this object is achieved by said radio head device comprising an input interface that is configured to receive a digitally modulated input signal from said external signal processing unit and to transform said digitally modulated input signal into an analog input signal, and at least two upconversion branches, wherein each upconversion branch is configured to filter at least one predetermined frequency subband of said analog input signal to obtain a subband input signal, and to transform said subband input signal into a predetermined RF range to obtain a respective RF subband signal. This configuration advantageously enables a simultaneous frequency upconversion of a plurality of subband input signals within the radio head device although only requiring the transmission of one digitally modulated signal to the radio head device.

According to a preferred embodiment, each upconversion path has an own local oscillator signal generator thus enabling to independently define to which specific RF range a particular subband input signal is to be upconverted to. This also enables to support fragmented frequency bands within the radio head device, wherein the RF ranges of the upconverted subband input signals may comprise frequency spacings of several MHz up to several ten GHz.

According to a further embodiment, said radio head device comprises combining means for combining at least two RF subband signals to obtain an RF output signal which may be forwarded for further processing, e.g. to an amplifier and/or predistortion means and/or an antenna network.

According to a further embodiment, said input interface comprises reconstruction filter means that have a passband range which is large enough to cover at least two, preferably all, neighboring frequency subbands of said digitally modulated input signal. Thus, advantageously, a plurality of frequency subbands may be reconstructed to form an analog signal for further processing by the plurality of upconversion branches.

According to a further embodiment, said radio head device comprises amplifier means to amplify at least one RF subband signal or an RF output signal comprising a plurality of RF subband signals, which enables to directly supply an antenna network with the amplified signal. According to a further embodiment, said radio head device comprises a local feedback path for linearization of said RF output signal. Alternatively or additionally, a feedback path which also includes a signal processing unit that provides the digitally modulated input signal to the radio head device may be provided.

A further solution to the object of the present invention is provided by a method of operating a radio head device according to claim 6. The method comprises the following steps: receiving a digitally modulated input signal from said external signal processing unit and transforming said digitally modulated input signal into an analog input signal by means of an input interface, filtering at least one predetermined frequency subband of said analog input signal to obtain a subband input signal and transforming said subband input signal into a predetermined RF range to obtain a respective RF subband signal by means of an upconversion branch.

According to a particularly preferred embodiment, said steps of filtering and transforming are performed simultaneously for a plurality of subband input signals by different upconversion branches.

According to a further embodiment, at least two RF subband signals are combined by means of combining means to obtain an RF output signal.

According to a further embodiment, said digitally modulated input signal is transformed into said analog input signal by means of reconstruction filter means that have a passband range which is large enough to cover at least two, preferably all, neighboring frequency subbands of said digitally modulated input signal.

According to a further embodiment, amplifier means amplify at least one RF subband signal or an RF output signal comprising a plurality of RF subband signals, wherein said RF output signal is linearized by means of a local feedback path. Linearization, however, is optional.

A further solution to the object of the present invention is provided by a signal processing unit for supplying a radio head device according to claim 11. Said signal processing unit is configured to aggregate a plurality of baseband signals into a common baseband signal which comprises different subbands, wherein neighboring subbands comprise a predetermined frequency spacing, wherein said signal processing unit is further configured to transform said common baseband signal into a, preferably optical, digitally modulated signal, and to forward said digitally modulated signal to said radio head device. Alternatively or additionally to the plurality of baseband signals, intermediate frequency (IF) signals may also be processed according to the embodiments. I.e., it is also possible to combine baseband signals with IF signals or various IF signals to obtain said "common baseband signal".

According to a further embodiment, said predetermined frequency spacing is adapted to a filtering characteristic of filter means of at least one of said upconversion branches, which ensures that each upconversion branch can isolate a specific subband input signal with sufficient precision.

According to a further embodiment, said digitally modulated signal comprises at least one of: pulse-width modulation, bandpass-delta-sigma modulation.

Further advantageous embodiments are given by the dependent claims.

### Brief description of the figures

Further features, aspects and advantages of the present invention are given in the following detailed description with reference to the drawings in which:
- Figure 1: depicts a schematic block diagram of a communications scenario involving a base station and two mobile terminals,
- Figure 2: depicts a simplified block diagram of a radio head device according to an embodiment,
- Figure 3: depicts a detailed block diagram of an input interface and an upconversion branch of a radio head device according to an embodiment,
- Figure 4: depicts a block diagram of a portion of a radio head device according to a further embodiment,
- Figure 5a: depicts a power spectral density of a baseband signal as processed by the radio head device according to an embodiment,
- Figure 5b: depicts a power spectral density of an RF signal as obtained at an output of a radio head device according to an embodiment, and
- Figure 6: depicts a simplified flow chart of a method of operating a radio head device according to an embodiment.

### Description of the Embodiments

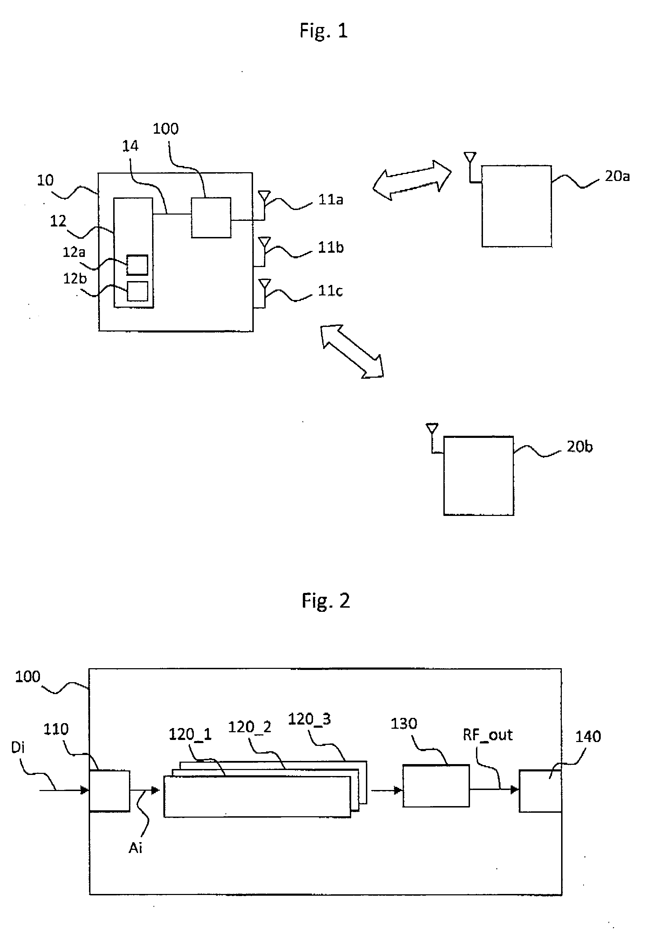

Figure 1 depicts a communications scenario involving a base station 10 of a cellular communications network and two mobile terminals 20a, 20b.

The base station 10 comprises a plurality of antennas 11a, 11b, 11c for exchanging radio frequency, RF, signals with corresponding antennas of the mobile terminals 20a, 20b in a per se known manner, e.g. such as according to one of the standards: GSM, UMTS, LTE. A central baseband signal processing unit 12 is provided in said base station 10 which performs basic baseband signal processing tasks such as signal creation, multi-carrier synthesis, clipping and the like.

A radio head device 100 is also associated with the base station 10. The radio head device 100 is configured to receive data, i.e. an input signal, from the baseband processing unit 12 via a transmission link 14, to process said received data in a way disclosed in detail below, and to transmit processed data to at least one antenna 11a of said base station 10 for transmission to the terminals 20a, 20b. Generally, the radio head device 100 comprises processing capabilities that enable to transform the signals received from said baseband processing unit 12 into any form suitable for output to the antennas 11a, .. or further transmission means suitable for transmitting RF signals.

It is to be noted that figure 1, particularly with respect to base station 10, merely illustrates a logical structure of base station 10 and not necessarily a physical arrangement of its components 11a, 11b, 11c, 12, 14, 100. Preferably, the various components 11a, 11b, 11c, 12, 14, 100 of the base station 10 are arranged at different locations, i.e. remote from each other. A particularly preferred configuration provides the baseband processing unit 12 to be located at a first location, such as a utility room of a building or the like. The further components 100, 11a, 11b, 11c are preferably located remote from said baseband processing unit 12, for instance on the top of a roof of the same building. It is also possible to arrange the radio head device 100 and its associated antennas 11a, 11b, 11c even further away from the baseband processing unit 12 such as e.g. in another building or even some kilometres away from the first location of the baseband processing unit 12.

For this purpose, in order to facilitate robust and high data rate signal transmission from the baseband processing unit 12 to the radio head device 100, the transmission link 14 is designed as a digital transmission link. I.e., a digital data format is used for data transmission from the baseband unit 12 to the radio head device 100. According to a preferred embodiment, a 1-bit digital modulation scheme is used for transmitting data via said transmission link. For instance, the digital signal provided by the baseband processing unit 12 may comprise a typical one-bit modulation scheme such as pulse-width, bandpass-delta-sigma, a combination thereof or other schemes known in the art. Although transmission link 14 may comprise electrical conductors and cables made thereof, a further particularly preferred variant for the transmission link 14 is an optical transmission link comprising one or more optical fibers. Combined electric and optical transmission links may also be provided.

Thus, according to an exemplary embodiment, the baseband processing unit 12 comprises a 1-bit modulator 12a (figure 1) and electro-optical conversion means 12b which supply a digital optical signal to the optical transmission link 14. This digital optical signal is representative of data to be transmitted by said base station 10 to the terminals 20a, 20b and may correspondingly comprise one or more respective data streams.

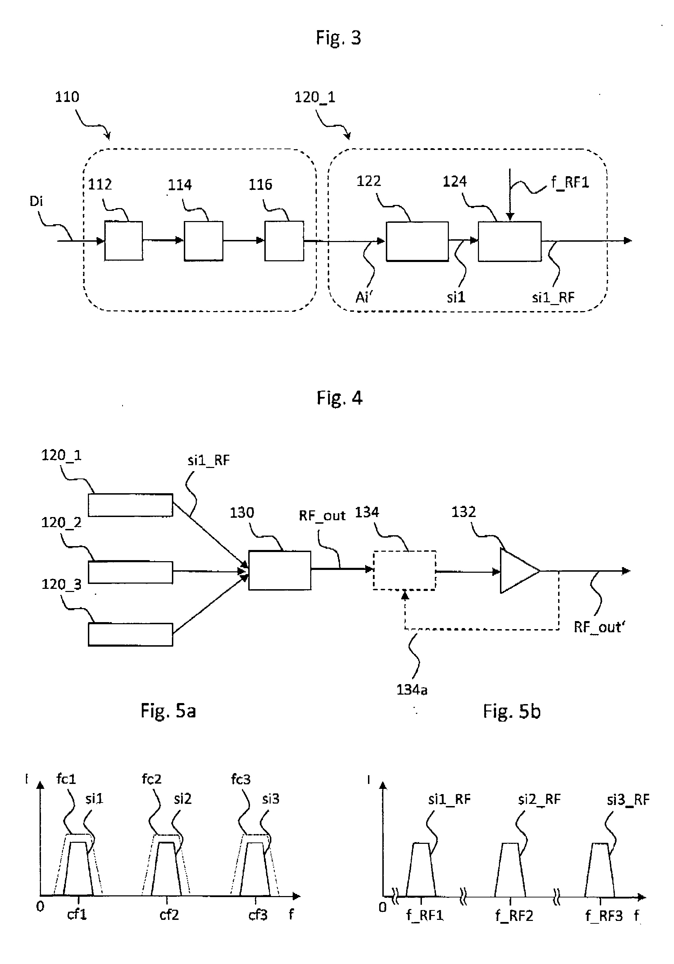

According to a particularly preferred embodiment, the baseband signal processing unit 12 is configured to aggregate a plurality of baseband signals (i.e., corresponding with data streams of a plurality of users) into a common baseband signal which comprises different subbands si1, si2, si3. Figure 5a depicts a spectral power density diagram (power density I plotted versus frequency f) of an exemplary common baseband signal as obtained by the baseband signal processing unit 12. As can be seen from Fig. 5a, within the present example, a total number of three baseband signals is aggregated to form the common baseband signal, wherein each of the three baseband signals is represented by a specific subband signal si1, si2, si3.

The aggregation of the baseband signals is performed by shifting a specific baseband signal to an associated subband frequency range which is centered around a respective center frequency cf1, cf2, cf3. Neighboring subbands si1, si2, si3 comprise a predetermined frequency spacing to enable an efficient separation of said subbands si1, si2, si3 within the radio head device 100 as explained below.

According to a further preferred embodiment, the predetermined frequency spacing between the different neighboring subbands si1, si2, si3, i.e. the values cf2-cf1, cf3-cf1, are especially adapted to a filtering characteristic of filter means comprised within the radio head device 100 to facilitate signal isolation for further processing after the input signal Di has been transmitted to the radio head device 100.

The above explained aggregation of a plurality of baseband signals and the digital modulation advantageously enable to supply the radio head device 100 with said plurality of baseband signals in a particularly efficient manner which only requires one optical fiber link 14 while further only requiring a comparatively low processing bandwidth within the device 12. Typically, for providing a digitally modulated signal Di which comprises n many baseband signals, at maximum a processing bandwidth of about 3*n*delta_f is required within the device 12, wherein delta_f represents a bandwidth of a single baseband signal. For example, the bandwidth of a single baseband signal may be 5 MHz.

The signal processing unit 12 is configured to transform said common baseband signal into a, preferably optical, digitally modulated signal Di, and to forward said digitally modulated signal Di as an input signal to said radio head device 100.

The radio head device 100, which may be arranged remotely from the baseband processing unit 12, receives the digital optical signal transmitted by the baseband processing means 12 via said transmission link 14 as an input signal Di. Generally, the transmission link 14 advantageously enables placement of the radio head device 100 remote from said baseband processing unit 12 due to its low loss and robustness.

Figure 2 depicts a schematic block diagram of a radio head device 100 according to an embodiment. As can be gathered from figure 2, the radio head device 100 comprises an input interface 110 that is configured to receive said digitally modulated, preferably optical, input signal Di that is transmitted by the baseband signal processing unit 12 (figure 1) via said link 14 to the radio head device 100 in the above explained manner. Alternatively, if the transmission link is of the electrical type, the input interface is configured respectively.

According to a preferred embodiment, the input interface 110 is also configured to perform a conversion of the received optical input signal Di to the electrical domain, i.e. to convert the digital optical signal Di to a digital electrical signal, which is performed in a per se known manner by opto-electric conversion means (not shown) integrated into said interface 110.

Moreover, the input interface 110 is also configured to transform said digitally modulated input signal Di into an analog input signal Ai, which can be accomplished by a reconstruction filter as explained below with reference to Fig. 3. The analog input signal Ai thus comprises a spectral power density which is substantially identical to the spectral power density of the common baseband signal as aggregated within the baseband signal processing device 12, cf. Fig. 5a.

The configuration of Fig. 2 further comprises three upconversion branches 120_1, 120_2, 120_3, wherein each upconversion branch 120_1, 120_2, 120_3 is configured to filter at least one predetermined frequency subband of said analog input signal Ai to obtain a subband input signal si1, si2, si3, and to transform said subband input signal si1, si2, si3 into a predetermined RF range to obtain a respective RF, subband signal si1_RF, si2_RF, si3_RF.

I.e., each upconversion branch 120_1, 120_2, 120_3 applies a filtering process to the analog input signal Ai to isolate one specific subband input signal si1, si2, si3, each of which corresponds with one baseband signal as aggregated by the device 12 prior to transmission to the radio head device 100. For this purpose, each upconversion branch 120_1, 120_2, 120_3 comprises filter means having a corresponding filter characteristic. As such, the filter means of the upconversion branches 120_1, 120_2, 120_3 should be adapted to the center frequencies cf1, cf2, cf3 and the bandwidths of the subband input signals si1, si2, si3 to enable an efficient and precise isolation of single input subbands within the respective upconversion branches 120_1, 120_2, 120_3.

For instance, the first upconversion branch 120_1 is provided for isolating the first subband input signal si1 from the analog signal Ai, and for upconverting the isolated first subband input signal si1 to an RF range. For this purpose, the first upconversion branch 120_1 comprises filter means a filter characteristic fc1 (Fig. 5a) of which is adapted to the bandwidth of the first subband input signal si1 and its frequency position cf1 within the analog input signal Ai.

Likewise, the second upconversion branch 120_2 comprises filter means a filter characteristic fc2 of which is adapted to the bandwidth of the second subband input signal si2 and its frequency position cf2 within the analog input signal Ai, and so on.

Although a preferred variant proposes filtering single frequency subbands si1 for a following upconversion process per upconversion branch, it is also possible to perform a filtering process within an upconversion branch that yields two or more adjacent frequency subbands si1, si2 for a common upconversion. In this case, of course, the filtering characteristic (usually passband-type) should comprise a passband range which is large enough to transmit all adjacent frequency subbands si1, si2 which are to be upconverted by the same upconversion branch.

The special configuration of the radio head 100 having several upconversion branches 120_1, 120_2, 120_3 advantageously enables a simultaneous frequency upconversion of a plurality of subband input signals si1, si2, si3 within the radio head device 100 although only requiring the transmission of one digitally modulated signal Di from the baseband signal processing device 12 (Fig. 1) to the radio head device 100.

After filtering a specific subband input signal si1, the first upconversion branch 120_1 transforms said subband input signal si1 into a predetermined first RF range to obtain a respective RF subband signal si1_RF, cf. Fig. 5b which exemplifies the RF ranges the various subband input signals si1, si2, si3 are transformed to. The further upconversion branches 120_2, 120_3 apply similar transformations to the further subband input signals si2, si3 to obtain the further RF subband signals si2_RF, si3_RF.

Preferably, the upconversion branches 120_1, 120_2, 120_3 operate independently of each other, which enables to transform the various subband input signals si1, si2, si3 to completely different RF ranges, if desired. For instance, the center frequency f_RF1 of the first RF subband signal si1_RF may equal 860 MHz, whereas the center frequency f_RF2 of the second RF subband signal si2_RF may equal 1860 MHz, and whereas the center frequency f_RF3 of the third RF subband signal si3_RF may equal 2660 MHz. Thus, a fragmented frequency band approach, which deals with providing RF signals with large frequency spacings f_RF2-f_RF1, f_RF3-f_RF2 is supported by the embodiments. To enable an efficient further processing of the upconverted signals si1_RF, si2_RF, si3_RF, they may be combined by combining means 130 (Fig. 2) which receive the upconverted signals si1_RF, si2_RF, si3_RF at respective inputs (not shown) and which output an aggregated RF output signal RF_out, which has the spectral components as depicted by Fig. 5b, at an output. The output of the combining means 130 is connected to an output interface 140 from which the RF output signal RF_out may be forwarded to a further device such as an amplifier or an antenna network.

The operating principle of the combining means 130 may e.g. be based on frequency path blocking using quarter-wave transmission line sections for the supply paths of the respective upconverted signals si1_RF, si2_RF, si3_RF together with a capacitive coupling to ground potential after said quarter-wavelength transmission line sections.

I.e., a first electrical path originating from an output of the first upconversion branch 120_1 and connecting said first upconversion branch 120_1 with a common junction node at an input of the amplifier 132 (Fig. 4), comprises one or more capacitive couplings to a ground potential at a position which has a distance of about one quarter wavelength for signal frequencies to be blocked from traveling backwards as seen from the junction node to the upconversion branch 120_1. For instance, to prevent signal frequencies of the upconverted signals si2_RF, si3_RF, which are also supplied to the junction node by means of electrical transmission lines, from traveling "backwards", i.e. from the junction node into the first upconversion branch 120_1, blocking capacitors to a ground potential may be connected to the electrical path between the output of the first upconversion branch 120_1 and said junction node.

The position of a first blocking capacitor with respect to the junction node is e.g. chosen to be about a quarter of a wavelength of the center frequency of the second upconverted signal si2_RF. Thus, the blocking capacitor, which basically represents a short to the ground potential for the RF signal si2_RF, is transformed into an open transmission line by means of the quarter-lambda-transmission line, which prevents the RF signal si2_RF from traveling to the output of the first upconversion branch.

The position of a second blocking capacitor for blocking the third RF signal si3_RF, with respect to the junction node is chosen likewise, i.e. to be about a quarter of a wavelength of the center frequency of the third upconverted signal si3_RF. Thus, the second blocking capacitor, which basically represents a short to the ground potential for the RF signal si3_RF, is transformed into an open transmission line by means of the quarter-lambda-transmission line, which prevents the RF signal si3_RF from traveling to the output of the first upconversion branch.

The further connections between the outputs of the further branches 120_2, 120_3 may be configured likewise.

Fig. 3 depicts a detailed block diagram of an input interface 110 and an upconversion branch 120_1 of the radio head device 100 according to an embodiment.

The input interface 110 comprises opto-electrical conversion means 112 to convert the optical input signal Di into an electrical input signal. Further, the input interface 110 comprises reconstruction filter means 114 that have a passband range which is large enough to cover at least two, preferably all, neighboring frequency subbands si1, si2, si3 (Fig. 5a) of said input signal Di. I.e., the filter means 114, too, are adapted to the common baseband signal as provided by the baseband signal processing device 12. The reconstruction filter means 114 operate to transform the digital electric input signal Di into an analog electric input signal Ai in a per se known manner.

Alternatively or additionally to employing a plurality of baseband signals to build up said common baseband signal, intermediate frequency (IF) signals may also be processed according to the embodiments. I.e., it is also possible to combine baseband signals with IF signals or various IF signals to obtain said "common baseband signal".

The input interface 110 further comprises splitter means 116 which provide a respective portion Ai' of the analog input signal Ai to each upconversion branch 120_1, 120_2, 120_3.

The upconversion branch 120_1 depicted by Fig. 3 comprises input filter means 122 which are configured to filter, i.e. isolate, the first subband si1 from the analog input signal portion Ai' for further processing, i.e. upconversion. The filter means 122 comprise the filter characteristic fc1 as depicted by Fig. 5a. Hence, preferably, the filter means 122 are narrowband filters. The resulting output signal si1 obtained at an output of the filter means 122 is transformed to the RF range, more precisely to an RF range around the first center frequency f_RF1, by upconversion means 124, which may e.g. provide a multiplication of the first subband signal si1 with a local oscillator signal having the frequency f_RF1, whereby the RF subband signal si1_RF is obtained.

The upconversion means 124 may also advantageously be configured as wideband mixers for dynamically altering the RF target frequency range for the upconversion process. Thus, the final center frequency f_RF1, f_RF2, f_RF3 of a respective RF subband signal may be altered during an operation of the device 100.

A similar processing of the further subbands si2, si3 is performed by the further upconversion branches 120_2, 120_3 of the radio head 100, cf. Fig. 2. Consequently, at an output of the combining means 130, an RF output signal RF_out (Fig. 2) is obtained which has the spectral components as depicted by Fig. 5b.

Figure 4 depicts a block diagram of a portion of a radio head device according to a further embodiment. Single RF subbands signals si1_RF, .. as obtained at an output of respective upconversion branches 120_1, 120_2, 120_3 are combined by the combining means 130 to obtain said RF output signal RF_out. The RF output signal RF_out is amplified by the power amplifier 132, whereby an amplified RF output signal RF_out' is obtained. The amplified RF output signal RF_out' may e.g. be supplied to an antenna 11a (Fig. 1) for transmission.

Preferably, the amplifier 132 is a wideband matched RF power amplifier which covers all RF subband signals si1_RF, si2_RF, si3_RF.

According to a further embodiment, an amplifier concept providing more than one power amplifier (not shown) for amplifying single RF signals si1_RF, si2_RF, .. is also possible, which reduces the bandwidth requirements of the power amplifiers.

Optionally, a local feedback path 134a may be provided to couple a portion of the amplified RF output signal RF_out' back to predistortion means 134 which apply a predistortion to the RF output signal RF_out in order to compensate nonlinearities imparted on said RF output signal RF_out by the amplification process.

Alternatively, a more comprehensive linearization, which also takes into account the stages 110, 120_1, 120_2, 120_3, 130 and any distortions added by these components, may also be performed. For this purpose, a respective feedback path (not shown) has to be provided from an output of the power amplifier 132 back to the baseband signal processing means 12, where a respective baseband predistortion functionality is to be implemented. Such non-local linearization would additionally require a downconversion of a feedback signal to enable baseband signal processing within the device 12.

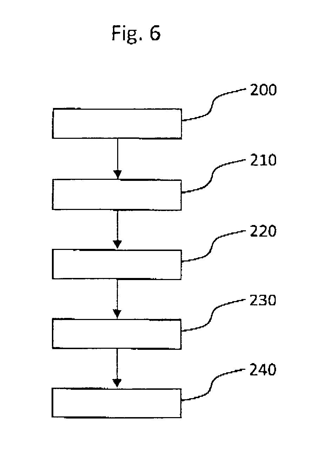

Figure 6 depicts a simplified flow chart of a method of operating a radio head device 100 according to an embodiment.

In a first step 200, the digitally modulated input signal Di is received from said external baseband signal processing unit 12. After that, in step 210, said digitally modulated input signal Di is transformed into the analog input signal Ai (Fig. 2) by means of the input interface 110.

Step 220 represents the filtering process of said at least one predetermined frequency subband of said analog input signal Ai to obtain a subband input signal si1, si2, si3. Step 220 usually is performed in parallel by the filter means 122 (Fig. 3) of respective upconversion branches 120_1, 120_2, 120_3.

After that, in step 230, the filtered subband input signal si1, si2, si3 is transformed into a predetermined RF range to obtain a respective RF subband signal si1_RF, si2_RF, si3_RF.

In step 240, the various RF subband signals si1_RF, si2_RF, si3_RF obtained within step 230 are combined to obtain the RF output signal RF_out.

The embodiments advantageously enable a far away distribution of the radio head 100 from the central baseband unit 10 (Fig. 1). Further, parallel coverage of fragmented frequency bands is enabled in an energy efficient manner with reasonable hardware effort.

The radio head device 100 according to the embodiments is not limited to be used in / with base stations of communications networks. It may rather be used in any target system that provides a plurality of input signals which are to be upconverted to the RF range.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the FIGs., including any functional blocks labelled as 'processors_{'}, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Radio head device (100), for receiving an input signal from an external signal processing unit (12) and for upconverting said input signal to a radio frequency, RF, range, wherein said radio head device (100) comprises:
- an input interface (110) that is configured to receive a digitally modulated input signal (Di) from said external signal processing unit (12) and to transform said digitally modulated input signal (Di) into an analog input signal (Ai), and
- at least two upconversion branches (120_1, 120_2, 120_3), wherein each upconversion branch (120_1, 120_2, 120_3) is configured to filter at least one predetermined frequency subband of said analog input signal (Ai) to obtain a subband input signal (si1, si2, si3), and to transform said subband input signal (si1, si2, si3) into a predetermined RF range to obtain a respective RF subband signal (si1_RF, si2_RF, si3_RF).

2. Radio head device (100) according to claim 1, wherein said radio head device (100) comprises combining means (130) for combining at least two RF subband signals (si1_RF, si2_RF) to obtain an RF output signal (RF_out).

3. Radio head device (100) according to one of the preceding claims, wherein said input interface (110) comprises reconstruction filter means (114) that have a passband range which is large enough to cover at least two, preferably all, neighboring frequency subbands of said digitally modulated input signal (Di).

4. Radio head device (100) according to one of the preceding claims, wherein said radio head device (100) comprises amplifier means (132) to amplify at least one RF subband signal (si1_RF, si2_RF) or an RF output signal (RF_out) comprising a plurality of RF subband signals (si1_RF, si2_RF, si3_RF).

5. Radio head device (100) according to one of the preceding claims, wherein said radio head device (100) comprises a local feedback path (134a) for linearization of said RF output signal (RF_out).

6. Method of operating a radio head device (100) for receiving an input signal from an external signal processing unit (12) and for upconverting said input signal to a radio frequency, RF, range, wherein said method comprises the following steps:
- receiving (200) a digitally modulated input signal (Di) from said external signal processing unit (12) and transforming (210) said digitally modulated input signal (Di) into an analog input signal (Ai) by means of an input interface (110),
- filtering (220) at least one predetermined frequency subband of said analog input signal (Ai) to obtain a subband input signal (si1, si2, si3) and transforming (230) said subband input signal (si1, si2, si3) into a predetermined RF range to obtain a respective RF subband signal (si1_RF, si2_RF, si3_RF) by means of an upconversion branch (120_1, 120_2, 120_3).

7. Method according to claim 6, wherein said steps of filtering (220) and transforming (230) are performed simultaneously for a plurality of subband input signals (si1, si2, si3) by different upconversion branches (120_1, 120_2, 120_3).

8. Method according to one of the claims 6 to 7, wherein at least two RF subband signals (si1 RF, si2_RF) are combined by means of combining means (130) to obtain an RF output signal (RF_out).

9. Method according to one of the claims 6 to 8, wherein said digitally modulated input signal (Di) is transformed into said analog input signal (Ai) by means of reconstruction filter means (112) that have a passband range which is large enough to cover at least two, preferably all, neighboring frequency subbands of said digitally modulated input signal (Di).

10. Method according to one of the claims 6 to 9, wherein amplifier means (132) amplify at least one RF subband signal (si1_RF, si2_RF) or an RF output signal (RF_out) comprising a plurality of RF subband signals (si1_RF, si2_RF, si3_RF), and wherein said RF output signal (RF_out) is linearized by means of a local feedback path (134a).

11. Signal processing unit (12) for supplying a radio head device (100), particularly a radio head device (100) according to one of the claims 1 to 5, with an input signal, wherein said signal processing unit (12) is configured to aggregate a plurality of baseband signals into a common baseband signal which comprises different subbands (si1, si2, si3), wherein neighboring subbands (si1, si2, si3) comprise a predetermined frequency spacing, wherein said signal processing unit (12) is further configured to transform said common baseband signal into a, preferably optical, digitally modulated signal (Di), and to forward said digitally modulated signal (Di) to said radio head device (100).

12. Signal processing unit (12) according to claim 11, wherein said predetermined frequency spacing is adapted to a filtering characteristic of filter means (122) of at least one of said upconversion branches (120_1, 120_2, 120_3).

13. Signal processing unit (12) according to one of the claims 11 to 12, wherein said digitally modulated signal (Di) comprises at least one of: pulse-width-modulation, bandpass-delta-sigma modulation.
